Europäisches Patentamt

(19) European Patent Office

Office européen des brevets

(11) Publication number: **0 006 322**
**A1**

(12) **EUROPEAN PATENT APPLICATION**

(21) Application number: 79301053.9

(22) Date of filing: 04.06.79

(51) Int. Cl.³: **F 16 B 17/00, E 04 H 17/00**

(30) Priority: 02.06.78 AU 4599/78
14.08.78 AU 5480/78

(43) Date of publication of application: 09.01.80
Bulletin 80/1

(84) Designated Contracting States: BE CH DE FR GB IT LU
NL SE

(71) Applicant: CURRUMBIN CENTRAL ENGINEERING
PTY. LTD., 53 Currumbin Creek Road, Currumbin,
Queensland 4223 (AU)

(72) Inventor: Coll, Brian William, Lot 14 Cangella Court,
Tugun Queensland 4224 (AU)

(74) Representative: Shipley, Warwick Grenville Michael,
VENNER, SHIPLEY & CO., Rugby Chambers 2 Rugby
Street, London WC1N 3QU (GB)

(54) **Improvements to fencing.**

(57) A fence assembly in which each end of a rail (12) extending longitudinally between spaced posts (11) is tightly gripped and held in position by a jointing grommet (17) fitted in an aperture (18) in the posts, the grommet having at least one normally extended pawl (24) thereon which is retractable to permit insertion of the grommet in the post aperture but which returns to its normal extended position after insertion to engage with the post and retain the grommet therein. Each rail (12) is preferably hollow and has a locking tab (28) engageable with the innermost edge of the grommet to prevent withdrawal of the rail therefrom.

- 1 -

IMPROVEMENTS TO FENCING

This invention relates to improvements to fencing
and to a method of and means for forming a joint between
elongate hollow sections.

The present invention has been devised to provide a
fence assembly which will have a neat appearance, which will
be reliable and robust in use, and which may be economically
and easily erected. This invention also provides a joint
formed between elongate hollow sections such as the joint
between the rails and posts of a fence assembly formed of
hollow elongate members. Other objects and advantages of the
invention will become apparent from the following description

With the foregoing and other objects in view, this
invention resides broadly in a method of securing one end of
a strut to a wall portion of a hollow member, said method
comprising the steps of:-

(a) forming in said wall an aperture shaped to
substantially conform to the cross-sectional shape of
said one end;

(b) inserting said one end through said aperture
into said hollow member; and

(c) interposing a grommet between said strut and
said wall about said aperture, said grommet fitting
tightly about said one end and having an outer flange
portion adapted to overlie the outer edge of said
aperture and a circumferential web assembly adapted to
pass through said aperture about said one end, and said
web assembly supporting thereon a normally extended
but retractable pawl member adapted to be retracted by engagement against said edge as said web assembly is forced through said aperture to position said pawl member behind said side wall, whereupon said pawl member will move to its normal extended position to overlie said inner edge.

This invention also resides in the provision of a fence assembly including a plurality of spaced supporting posts and substantially horizontal struts extending between respective pairs of said spaced posts and each end of each said strut being adapted to be secured to a said post by forming in the side wall of said post an aperture to substantially conform to the cross-sectional shape of said end; inserting said end through said aperture into said post, and interposing a grommet between said strut and said wall about said aperture, said grommet fitting tightly about said end and having an outer flange portion adapted to overlie the outer edge of said aperture and a circumferential web assembly adapted to pass through said aperture about said end, and said web assembly supporting thereon a normally extended but retractable pawl member adapted to be retracted by engagement against said edge as said web assembly is forced through said aperture to position said pawl member behind said side wall, whereupon said pawl member will move to its normal extended position to overlie said inner edge.

This invention resides further in a jointing grommet for the method as set forth above and including an outer flange portion adapted to overlie the outer edge of the aperture in said hollow member and a circumferential web assembly adapted to pass through said aperture, and said web assembly supporting thereon a normally extended but retractable pawl member adapted to be retracted by engagement against said edge as said web assembly is forced through said aperture to position said pawl member behind said side wall, whereupon said pawl member will move to its normally extended position to overlie said inner edge.

In order that the invention may be more readily understood and put into practical effect, reference will now be made to the accompanying drawings which illustrate a preferred embodiment of the invention and wherein:-

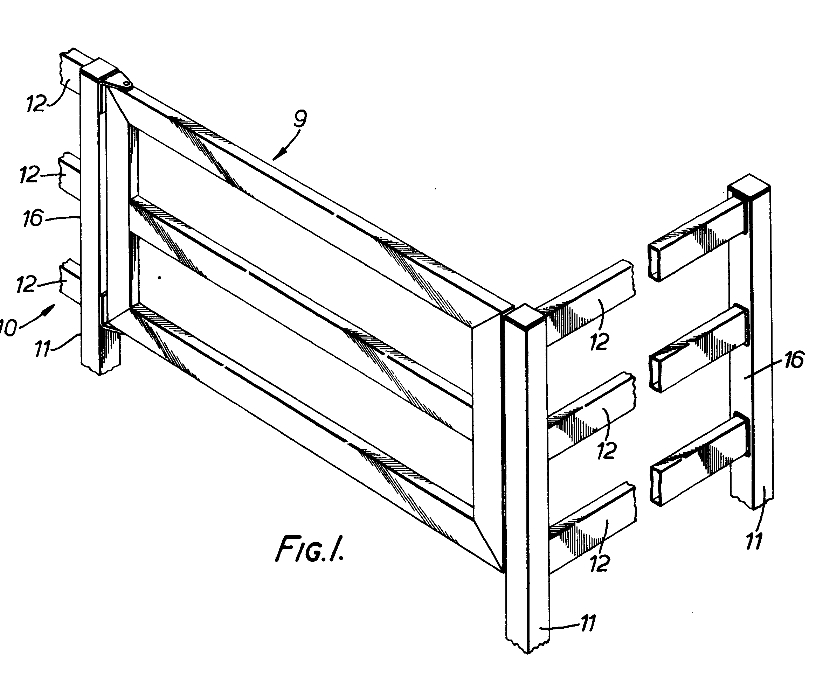

Fig. 1 is a perspective view of a fence assembly constructed according to the present invention;

Fig. 2 is an enlarged external view of a rail to post joint;

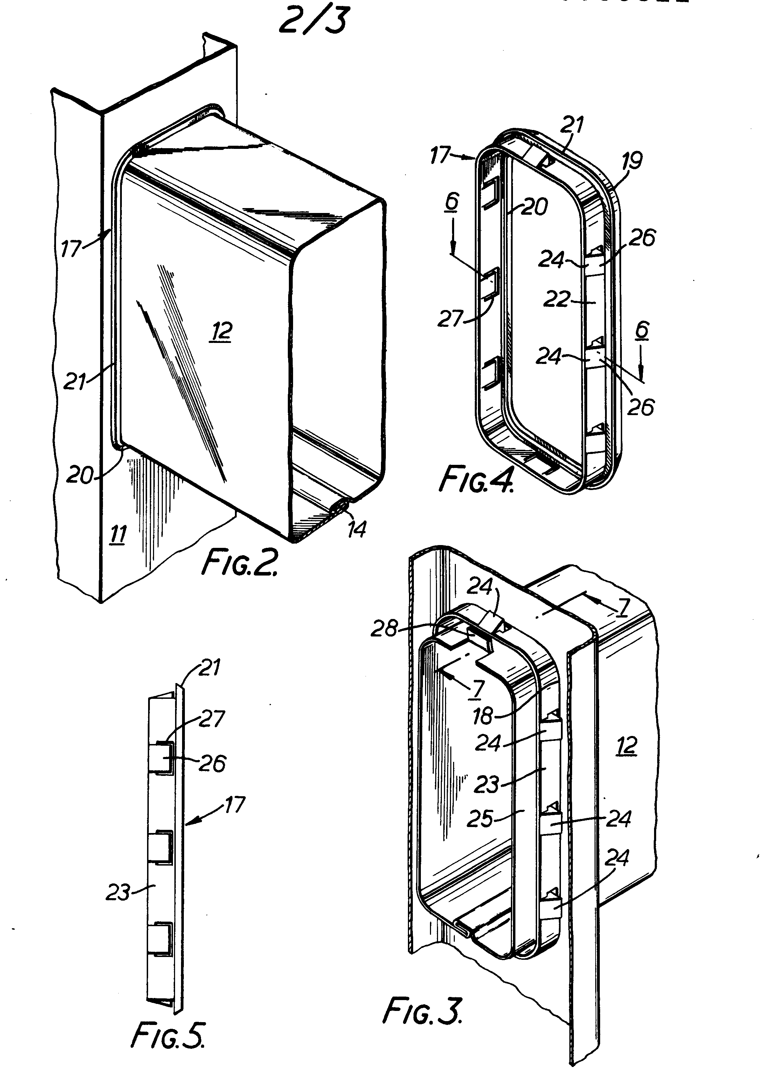

Fig. 3 is an internal view corresponding to Fig. 2;

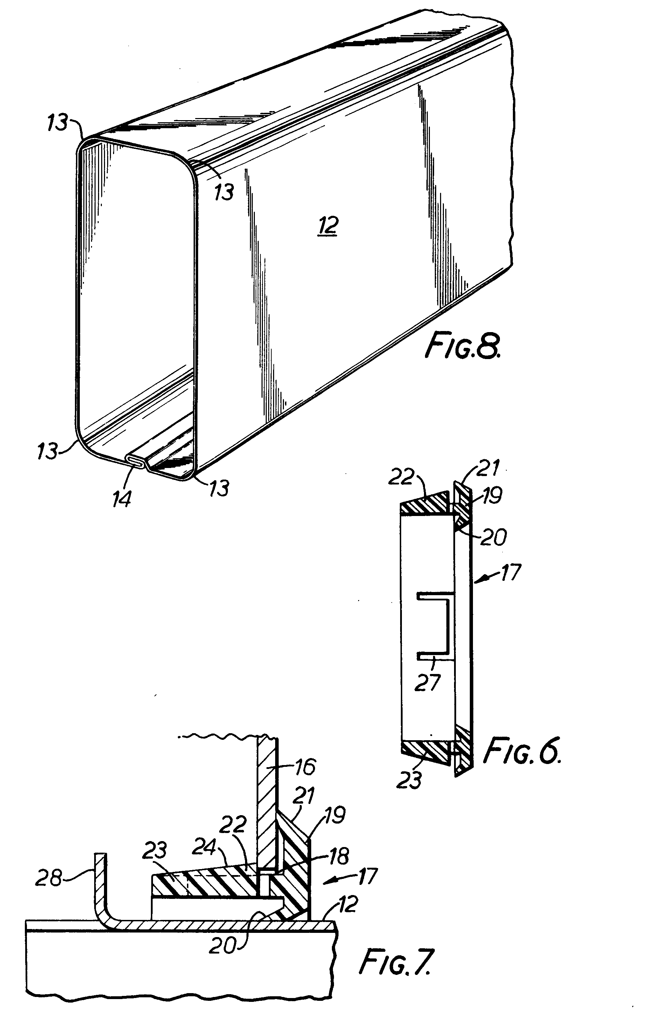

Fig. 4 is a perspective view of a jointing grommet according to the present invention;

Fig. 5 is a side view of the grommet;

Fig. 6 is a cross-sectional view of the grommet taken along the line 6 - 6 of Fig. 4;

Fig. 7 is an enlarged cross-sectional view showing the interlocking relationship between the post, grommet and rail and taken along the line 7-7 of Fig. 3, and

Fig. 8 is a perspective view of a preferred form of a lock-seamed roll-formed metal section for a fence according to the present invention.

This invention has been devised to provide an attractive fence assembly 10 preferably utilising roll-formed metal posts 11 and rails 12, but of course other types of hollow members could be used if desired. In the preferred embodiment, the roll-formed components are formed from treated metal sheet such as painted and galvanised sheet sold in Australia under the trade mark "COLORBOND", and which may be roll-formed without destroying the protective and decorative coloured surface coating applied thereto. As illustrated in Fig. 8, the rail member 12 is roll-formed to a rectangular hollow shape having rounded corners 13 and an internal roll-formed lock-seam 14 arranged in the lower face 15 of the rail 12 which is normally shielded from view.

The posts 11 are roll-formed in similar manner to a substantially square cross-sectional configuration and are correspondingly apertured at opposite sides thereof to receive the ends of the respective rails 12. The apertures 18 in the respective side faces 16 of the posts 11 are pre-punched during the roll-forming process and are so formed that the ends of the rails 12 may pass freely therethrough leaving a clearance between the post and the rail to enable a flexible grommet 17 to be interposed therebetween to fit tightly within the aperture 18 about the outer face of the rail 12 so as to prevent water penetration into the interior of the post 11 and, at the same time, providing an interlocking arrangement between the respective post 11 and rails 12 as will hereinafter become apparent.

Any number of vertically spaced rails may be provided in the desired fence configuration, and in the illustrated embodiment, three rails equally spaced are provided supported in the upper portion of the post 13. The gate assembly 9 similarly comprises three rails the upper and lower faces of which are mitre jointed with end members to form the gate frame. The gate assembly is hinged at a post by means of a simple pin hinge arrangement as illustrated which includes a pin supporting bracket adapted to be bolted or screwed to the fence post. The pin extends into engagement within an aperture in the respective upper and lower rails of the gate.

The grommet 17 has an outermost radially extending flange 19 provided with inner and outer deformable sealing fins 20 and 21 respectively which are adapted, in operation, to engage sealably against the outer face of the rails 12 and the side face of the post respectively, to form a weatherproof joint therebetween. This arrangement is clearly shown in Fig. 7. A circumferentially extending integral web assembly 22 extends inwardly from the outermost flange 19 through the gap between the post and rail and the innermost portion 23 thereof which extends about the inner end 25 of the rail 12, provides a support for a plurality of retractable pawl members 24 located in spaced relationship around the web assembly 22. These pawl members 24 are formed integrally with the innermost portion 23 but the web assembly 22 is cut away at 27 around the protruding end portions 26 of the pawl members 24, whereby the protruding end portions 26 may be forced pivotally inwardly to a retracted position to enable the web assembly 22 to pass through the aperture 18 in the post. When the grommet has been pushed to its fully home attitude around the aperture 18, the pawl members 24 return to their extended attitude at which they extend beyond the inner edge of the aperture 18 so as to prevent retraction of the grommet 17 from the post 11.

As shown in Fig. 7, the outermost sealing fins 21 extend rearwardly towards said pawl members 24 and the parts are so made and arranged that the outermost sealing fin 21 has to be pressed tightly against the side face 16 of the post 11 to enable the pawl members 24 to pass behind the back of the side face 16 and move to their extended position therebehind. Once in this position the pawls will prevent retraction of the grommet so that a sealing pressure is maintained between the sealing fin 21 and side face 16. Similarly, the innermost sealing fin 20 has to be pushed inwards to enable the rail to pass therethrough so that the grommet also seals about the rail 12 to form a weatherproof joint between the rail and post.

Furthermore, the inner portion 25 of each rail is provided with at least one outwardly projecting locking tab 28 which is pressed outwardly from the rail a distance sufficient to engage behind the innermost portion 23 to prevent retraction of the rail from the post 11, but not so far outwardly to prevent insertion of the rail 12 through the aperture 18 as will become apparent.

Preferably there are provided prefabricated concrete footings having sockets therein for supporting the lower ends of the posts 11, and preferably undersize holes are pre-drilled for each footing which may be securely embedded in the rail by forcing the footing into the respective undersize hole with the use of a mandrel adapted to be supported temporarily in the post socket provided in the footing. When the footing has been sunk to its operative depth the mandrel is removed from the socket and the post is arranged in the footing in its place. If desired the post can be cemented into the footing.

After the posts have been erected, the rails are operatively fitted thereto to extend between the posts. For this purpose, the respective grommets for each end of each rail are placed about the rails and move inwardly therealong to enable the rail ends 25 to be inserted one after the other through the respective apertures 18 punched in the rails. This is achieved by allowing the rail ends to move downwardly to the lower edge of the aperture 18 whereby the tab 28 may pass beneath the upper edge of the aperture 18. The respective grommets are then moved into operative engagement between the rail and the post whereby the joint is securely locked in place. Once the joint has been made it cannot be disassembled unless the locking tab 28 is bent downwardly to enable the rail to be withdrawn from the post, whereafter the grommet may be removed. For this purpose, the top of the post is provided with a press-on capping which may be removed to enable access to the locking tab to be gained when necessary.

Of course, the configuration of the grommet as illustrated is applicable only to rectangular sections and it may be varied to suit other sections and used for purposes other than securing together hollow fence members. The number and nature of the retractable locking tabs may be as desired depending upon the application, and the joint of this invention may be formed between members arranged at angles other than at ninety degrees.

It will of course be realised that the above has been given only by way of illustrative example of a practical embodiment employing the concepts of the present invention and all such modifications and variations thereto as would be apparent to persons skilled in the art are deemed to fall within the broad scope and ambit of the invention as is defined in the appended claims.

1.          A method of securing one end of a strut to
a wall portion of a hollow member, said method comprising
the steps of:-

(a)   forming in said wall an aperture shaped to
substantially conform to the cross-sectional shape of
said one end;

(b)   inserting said one end through said
aperture into said hollow member, and

(c)   interposing a grommet between said strut
and said wall about said aperture, said grommet
fitting tightly about said one end and having an
outer flange portion adapted to overlie the outer
edge of said aperture and a circumferential web
assembly adapted to pass through said aperture
about said one end, and said web assembly supporting
thereon a normally extended but retractable pawl
member adapted to be retracted by engagement
against the said edge as said web assembly is forced
through said aperture to position said pawl member
behind said side wall, whereupon said pawl member
will move to its normal extended position to overlie
said inner edge.

2.          A method according to Claim 1, including the
step of providing said strut, prior to insertion into
said hollow member, with a locking tab extending outwardly
from said one end, said tab being adapted to overlie
the innermost end of said web assembly to prevent
retraction of said strut from said hollow member.

3.        A fence  assembly including a plurality of spaced
supporting posts and rails extending between respective
pairs of said spaced posts and each end of each said rail
being adapted to be secured to a said post by forming in
the side wall of said post an aperture to substantially
conform to the cross-sectional shape of said end;  inserting
said end through said aperture into said post, and
interposing a grommet between said rail and said wall about
said aperture, said grommet fitting tightly about said end
and having an outer flange portion adapted to overlie  the
outer edge of said aperture and  a circumferential web
assembly adapted to pass through said aperture about said end,
and said web assembly supporting thereon a normally extended
but retractable pawl member adapted to be retracted by
engagement  against said edge as said web asssembly is
forced through said aperture to position said pawl member
behind said side wall, whereupon said pawl member will move
to its normal extended position to overlie said inner edge.

4.        A fence assembly according to Claim 3, wherein
each said rail is a hollow member and wherein there is
provided at  each end of each rail a locking tab extending
outwardly from the strut to overlie the innermost end of
said web assembly to prevent retraction of the rail from
the respective post.

5.        A fence assembly according to Claim 4, wherein
said posts and said rails are roll-formed from metal plate
to elongate rectangular hollow sections wherein the edges
of said plate are  connected together in their roll-formed
configuration by an internal roll-formed seam.

6.       A fence assembly according to Claim 5, wherein said metal plate is provided with a protective and decorative finish prior to roll-forming and wherein said apertures in said posts are pre-punched during the roll-forming operation.

7.       A jointing grommet for use in the method as defined in Claim 1 or Claim 2, including an outer flange portion adapted to overlie the outer edge of the aperture in said hollow member and a circumferential web assembly adapted to pass through said aperture, and said web assembly supporting thereon a normally extended but retractable pawl member adapted to be retracted by engagement against said edge as said web assembly if forced through said aperture to position said pawl member behind said side wall, whereupon said pawl member will move to its normally extended position to overlie said inner edge.

8.       A jointing grommet according to Claim 7, wherein the parts are formed integrally from a resilient plastics material and wherein there are provided a plurality of said pawls disposed in spaced relationship around said circumferentially extending web assembly, and wherein each said pawl is a ramp-like member supported within a cutout in said web assembly and connected thereto at the tapered end thereof whereby the pawl may pivot about said tapered end between said retracted and extended attitudes.

9.       A jointing grommet according to Claim 8, wherein the face of each said pawl member adapted to engage behind said wall is longitudinally spaced from the outer edge of said flange which overlies the outer edge of said aperture

- 4 -

0006322

a distance less than the thickness of said wall whereby when said grommet is operatively supported about said aperture the outer edge of said flange is forced into sealing engagement with said side wall.

10.      A jointing grommet substantially as hereinbefore described with reference to the accompanying drawings.

FIG.1.

2/3

0006322

FIG.2.

FIG.4.

FIG.5.

FIG.3.

13

13

12

13

*Fig.8.*

13

14

13

22 21

19

20

17

27

*Fig.6.*

23

16

21

22 19

24 18

23 17

28 12

20

*Fig.7.*

## DOCUMENTS CONSIDERED TO BE RELEVANT

| Category | Citation of document with indication, where appropriate, of relevant passages | Relevant to claim |
|---|---|---|
| | DE – U – 1 907 242 (CONTINENTAL ELEKTROINDUSTRIE A.G. VOIGT & HAEFFNER) <br> * fig. 1 * <br> –– | 1-4, 7,8 |
| | DE – A – 2 256 045 (CEGEDUR SOCIETE DE TRANSFORMATION DE L'ALUMINIUM PECHINEY) <br> * fig. 2 * <br> –– | 1-4, 7,8 |
| | US – A – 3 822 053 ( DAILY) <br> * fig. 2 * <br> –– | 1-4, 7 |
| | FR – A – 2 144 919 (F.T. PRODUCTS) <br> * fig. 1 to 4 * <br> –– | 1,2, 4 |
| | US – A – 3 955 801 (SORIERO, JR.) <br> * fig. 1 * <br> –– | 1,2 |
| | DE – U – 1 986 852 (ORIGINAL HANAU QUARTZLAMPEN) <br> * fig. 2 * <br> –– | 1,2 |
| | DE – A – 1 684 577 (BOCHUMER DRAHTWAREN- UND GITTERFABRIK,FRITZ BUHR) <br> * fig. 1 * <br> –––– | 1 |

**CLASSIFICATION OF THE APPLICATION (Int. Cl.²)**

F 16 B 17/00
E 04 H 17/00

**TECHNICAL FIELDS SEARCHED (Int.Cl.²)**

E 04 H 17/00
F 16 B 17/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |
| Place of search <br> Berlin | Date of completion of the search <br> 14-08-1979 | Examiner <br> ZAPP |

EPO Form 1503.1 06.78